# EUROPÄISCHE PATENTSCHRIFT

(11) **EP 4 291 797 B1**
(45) Veröffentlichungstag und Bekanntmachung des Hinweises auf die Patenterteilung: **01.04.2026**
(21) Anmeldenummer: 22706227.0
(22) Anmeldetag: 03.02.2022
(51) Int. Cl.: F16D 65/12, F16D 69/02, C22C 38/22, C22C 38/44

(54) **BREMSSCHEIBE FÜR EINE SCHEIBENBREMSE**
BRAKE DISC FOR A DISC BRAKE
DISQUE DE FREIN POUR FREIN À DISQUE

(30) Priorität: 10.02.2021 AT 5002321 U
(43) Veröffentlichungstag der Anmeldung: 20.12.2023
(73) Patentinhaber: Plansee SE, 6600 Reutte (AT)
(72) Erfinder: HAMMERLE, Walter, 6600 Reutte (AT); EIDENBERGER-SCHOBER, Michael, 6600 Reutte (AT); MARK, Michael, 6600 Reutte (AT); LOIDOLT, Peter, 6600 Reutte (AT)
(74) Vertreter: Ciesla, Dirk
(86) Internationale Anmeldenummer: PCT/AT2022/060032
(87) Internationale Veröffentlichungsnummer: WO 2022/170374

(56) Entgegenhaltungen:
- EP-A1- 1 023 542
- EP-B1- 1 023 542
- DE-A1- 10 354 655
- DE-A1- 102011 056 307
- DE-A1- 102014 015 474
- DE-A1- 3 930 402
- DE-B- 1 147 164
- DE-B- 1 284 197
- DE-T2- 69 714 587

## Beschreibung

Die vorliegende Erfindung betrifft eine Bremsscheibe mit den Merkmalen des Oberbegriffs von Anspruch 1.

Bremsscheiben haben die Aufgabe, in einer Scheibenbremse als Reibpartner mit einem Bremsbelag zusammenzuwirken. Eine Scheibenbremse umfasst als Reibpartner eine Bremsscheibe (auch als Rotor bezeichnet) und wenigstens einen Bremsbelag, der zur Erzeugung von Reibung auf die Bremsscheibe gedrückt wird.

Reibungskräfte werden dabei als Bremsmoment typischerweise auf eine Nabe übertragen. Ein Großteil der entstehenden Wärme wird in die Bremsscheibe eingebracht und muss von dieser abgeführt werden. Beim Einsatz einer Bremsscheibe treten erhebliche thermische und mechanische Belastungen auf.

Bremsscheiben für Scheibenbremsen bestehen in der Regel aus Stahl oder Gußeisen. Die WO2012157680 (A1) beschreibt beispielsweise einen martensitischen rostfreien Stahl für eine Bremsscheibe für ein Fahrrad.

Die DE102014015474 A1 (Daimler) zeigt eine Bremsscheibe aus einem Grauguss-Substrat mit oberflächlicher Anreicherung des Graugusssubstrats mit Chrom oder Molybdän. Gemäß dieser Schrift wird eine Haftschicht für den Reibbelag auf das Graugusssubstrat aufgebracht, welche Haftschicht 20 bis 60 Gew.-% Molybdän enthalten kann.

Die DE3930402 A1 (Honda) beschreibt einen Reibungswerkstoff für einen Bremsbelag, der 5 bis 20 Gewichtsprozent Molybdän-Disulfid enthalten kann. Die DE69714587 T2 (FREINRAIL) betrifft die Herstellung von Reibbelägen die mit Scheiben in Bremssystemen, insbesondere Eisenbahn-Bremssystemen, ·zusammenwirken. Dazu wird ein Pulvergemisch gesintert und geschmiedet. Das Pulvergemisch kann 10 gew. % Molybdän enthalten.

Die D4 - DE10354655 A1 (Bosch) beschreibt ein Verfahren zur Herstellung eines Verbundbauteils, insbesondere einer Bremsscheibe, durch Pressen des keramischen Pulvers, Sintern zu einem keramischen Vorkörper und anschließende Infiltration mit einer Metallschmelze.

Es ist das Bestreben, die thermische und / oder mechanische Belastbarkeit von Bremsscheiben zu steigern.

Aufgabe der vorliegenden Erfindung ist es, eine verbesserte Bremsscheibe anzugeben.

Die Aufgabe wird gelöst durch eine Bremsscheibe mit den Merkmalen von Anspruch 1. Bevorzugte Weiterbildungen sind in den abhängigen Ansprüchen angelegt.

Erfindungsgemäß ist vorgesehen, dass die Bremsscheibe einen umlaufenden Reibungsabschnitt aufweist, welcher Reibungsabschnitt vollständig aus einem metallischen Werkstoff mit einem Molybdängehalt von ≥ (größer oder gleich) 50 wt.% (Gewichts-Prozent) gebildet ist. Die Bremsscheibe für eine Scheibenbremse umfasst den Reibungsabschnitt, einen Befestigungsabschnitt zur Befestigung der Bremsscheibe an eine Nabe oder dergleichen und einen Trägerabschnitt zur Übertragung der Kräfte zwischen Reibungsabschnitt und Befestigungsabschnitt. In der Regel weist eine Bremsscheibe deutliche Materialaussparungen auf. "Deutlich" heißt hier, dass insbesondere über 10% der Fläche nicht mit Material gefüllt sind.

Der Werkstoff mit einem Molybdängehalt von ≥ 50 wt.% ist vorzugsweise metallisch. Der Werkstoff mit einem Molybdängehalt von ≥ 50 wt.% kann beispielsweise eine Molybdän-basierte Legierung sein, oder ein Verbundwerkstoff mit Molybdän sein (etwa ein mit Kupfer infiltriertes Molybdän), oder ein Werkstoffverbund aus verschiedenen Lagen (beispielsweise ein Laminat oder ein Verbund mit Spritzschichten), oder auch reines Molybdän sein. In anderen Worten wird für eine Bremsscheibe zumindest abschnittsweise Molybdän oder ein Molybdän-basierter Werkstoff vorgeschlagen. Im Falle einer Legierung besteht die Mischung von Molybdän mit Legierungselementen auf atomarer Ebene, während bei Verbundwerkstoffen und Werkstoffverbunden ein Verbund von Molybdän mit wenigstens einem weiteren Werkstoff auf makroskopischer Ebene besteht.

Bevorzugt weist der Werkstoff einen Molybdängehalt von ≥ 80 wt.%, weiter bevorzugt ≥ 90 wt.%, insbesondere bevorzugt von ≥ 95 wt.% auf. In anderen Worten besteht der Werkstoff bevorzugt vorwiegend aus Molybdän. Aufgrund der kommerziellen Verfügbarkeit von Halbzeug aus Molybdän oder einer Molybdän-Basislegierung kann eine Darstellung aus reinem Molybdän oder einer Molybdän-Basislegierung besonders wirtschaftlich sein.

In aller Regel und bevorzugt ist der Werkstoff pulvermetallurgisch dargestellt. Eine pulvermetallurgische Herstellung umfasst ein Bereitstellen und Verdichten von Metallpulvern und ein anschließendes Sintern. Ein pulvermetallurgisch hergestellter Werkstoff weist ein Sintergefüge auf und ist für den Fachmann aus Gefügeaufnahmen als solcher zu erkennen. Merkmale eines Sintergefüges, insbesondere des Sintergefüges einer Molybdän-Basislegierung, sind unter anderem eine feinere und gleichmäßigere Kornstruktur gegenüber einem Gussgefüge. In der Regel ist der Werkstoff chemisch besonders homogen.

Ferner ist insbesondere bei Refraktärmetallen die pulvermetallurgische Route wirtschaftlicher. Dies unter anderem deshalb, weil ein Sintern deutlich unter einer Schmelztemperatur erfolgt.

In der Regel werden Werkstoffe mit einem Molybdängehalt von ≥ 50 wt.% wegen ihrer Hochtemperatureigenschaften und / oder Korrosionsbeständigkeit und / oder besonderer thermophysikalischer Eigenschaften eingesetzt.

Die Anmelderin hat überraschend festgestellt, dass Molybdän bzw. Molybdän-basierte Werkstoffe sehr vorteilhafte Eigenschaften für einen Einsatz in einer Bremsscheibe aufweisen.

Als besonders interessant haben sich unter anderem folgende Eigenschaften erwiesen, die im Folgenden tabellarisch mit den damit verbundenen Vorteilen gegenüber Stahl oder Aluminium als Referenz-Werkstoffe angegeben werden. In der Tabelle sind Werkstoffkennwerte von reinem Molybdän mit denen eines martensitischen rostfreien Stahls, Werte jeweils bei Raumtemperatur (RT), verglichen. Wo in der Tabelle zutreffend, wurde für einen direkten Vergleich der Stahl mit der Werkstoffnummer 1.4021 als typischer Vertreter von Stählen für Bremsscheiben herangezogen, insbesondere für Bremsscheiben von Fahrrädern.

| **Eigenschaften von Molybdän / Molybdän-basierten Werkstoffen** | **Vorteile von Molybdän gegenüber Referenz** |
|---|---|
| hohe Verschleißbeständigkeit | längere Lebensdauer und/ oder geringere zulässige Materialstärke |
| hohe thermische Leitfähigkeit (Wärmeleitfähigkeit Molybdän: 142 W/mK) | verbesserte Wärmeabfuhr (Wärmeleitfähigkeit 1.4021: 30 W/mK) |
| geringe spezifische Wärmekapazität (Wärmekapazität Molybdän 0,25 J/(g K) | raschere Temperaturannahme, günstig insbesondere bei Nassbetrieb (Wärmekapazität 1.4021: 0,46 J/g K) |
| Geringe Wärmeausdehnung von Mo (5,3*10⁻⁶ K⁻¹) | Geringere Deformation der Bremsscheibe (Stahl: 10,5*10⁻⁶ K⁻¹) |
| hoher E-Modul (E-Modul Molybdän: 320 GPa) | höhere Steifigkeit als Stahl (E-Modul 1.4021: 215 GPa) |

Als besonders günstig haben sich in Untersuchungen der Anmelderin Bremsscheiben auf Basis von Molybdän bei einem Anbremsen (kurzer Bremsimpuls) und im Nassbetrieb erwiesen. Anmelderseits wird das auf die vergleichsweise geringe spezifische Wärmekapazität [J/gK] von Molybdän zurückgeführt: bereits durch einen kurzen Bremsimpuls erwärmt sich die Bremsscheibe schnell und wird rasch trocken, bevor dann die hohe Wärmeleitfähigkeit von Molybdän für eine wirksame Wärmeabfuhr sorgt.

Die geringe Wärmeausdehnung von Molybdän führt zu kleineren Deformationen und / oder geringeren thermisch induzierten Spannungen.

Auch wurde bei Bremsscheiben aus Molybdän ein günstiges Reibungsverhalten festgestellt insofern, als ein im Wesentlichen konstanter Reibungskoeffizient über einen breiten Temperaturbereich vorliegt. Dies führt zu einer geringeren Veränderung der Bremseigenschaften mit der Temperatur im Vergleich zu Stahl.

Ferner erlauben die hohe Festigkeit und der hohe E-Modul von Molybdän eine besonders dünnwandige Ausbildung der Bremsscheibe.

Eine Bremsscheibe kann bezüglich ihrer räumlichen Bereiche und den damit verbundenen vorwiegenden Aufgaben typischerweise gegliedert werden in:
- einen Reibungsabschnitt, welcher bei einem Bremsvorgang in einer Reibpaarung mit einem Reibpartner steht,
- einen (in der Regel) mittelpunktsnahen Befestigungsabschnitt zur Befestigung der Bremsscheibe an eine Nabe oder dergleichen,
- einen dazwischen gelegenen Trägerabschnitt zur Übertragung der Kräfte zwischen Reibungsabschnitt und Befestigungsabschnitt.

Der Reibungsabschnitt bezeichnet dabei jenen geometrischen Bereich an der Bremsscheibe, an welchem bei einem Betrieb eine Bremsleistung eingebracht wird. In der Regel liegt der Reibungsabschnitt an einem äußeren Umfang der Bremsscheibe. Die Bremsleistung wird über Reibung erbracht, indem Bremsbeläge an die sich drehende Bremsscheibe angepresst werden. Insbesondere ist der Reibungsabschnitt umlaufend, das heißt er bildet einen durchgehenden Scheibenring.

Es ist vorgesehen, dass die Bremsscheibe einen umlaufenden Reibungsabschnitt aufweist, der zumindest abschnittsweise aus einem Werkstoff mit einem Molybdängehalt von ≥ 50 wt.% besteht.

Der umlaufende Reibungsabschnitt ist dabei ein bezüglich seiner radialen Erstreckung festlegbarer Bereich der Bremsscheibe, der zur Kontaktierung mit mindestens einem Reibpartner (typischerweise einem Bremsbelag) vorgesehen ist. Gemäß dieser Variante ist also lediglich jener Abschnitt der Bremsscheibe aus dem Werkstoff mit einem Molybdängehalt von ≥ 50 wt.% gebildet, welcher in einem Bremsvorgang in einer Reibpaarung mit einem Reibpartner steht.

Es kann auch vorgesehen sein, dass der Werkstoff mit einem Molybdängehalt von ≥ 50 wt.% in Form von Einsätzen in dem Reibungsabschnitt angeordnet ist.

Der umlaufende Reibungsabschnitt kann stoffschlüssig mit der restlichen Bremsscheibe verbunden sein oder als Ring vorliegen, der mit einem Trägerabschnitt der Bremsscheibe mechanisch und / oder stofflich verbunden ist.

Der Werkstoff mit einem Molybdängehalt von ≥ 50 wt.% muss dabei nicht notwendigerweise eine Außenoberfläche des umlaufenden Reibungsabschnitts bilden.

Bevorzugt jedoch bildet der Werkstoff mit einem Molybdängehalt von ≥ 50 wt.% eine Außenoberfläche des umlaufenden Reibungsabschnitts. Davon umfasst sind auch Varianten aus dem Mo-enthaltenen Werkstoff mit einer Beschichtung. Eine Beschichtung aus einem abweichenden Werkstoff für diese Anwendung beträgt typischerweise wenige µm Stärke (insbesondere < 20 µm Stärke).

Insbesondere besteht der umlaufende Reibungsabschnitt vollständig aus dem Werkstoff mit einem Molybdängehalt von ≥ 50 wt.%, abgesehen von einer etwaigen Beschichtung.

Wie bereits ausgeführt, weist der Werkstoff mit einem Molybdängehalt von ≥ 50 wt.%, welcher hier den umlaufenden Reibungsabschnitt bildet, bevorzugt einen Molybdängehalt von ≥ 80 wt.%, weiter bevorzugt ≥ 90 wt.%, insbesondere bevorzugt ≥ 95 wt.% auf.

Der umlaufende Reibungsabschnitt kann dabei als ein mit dem Trägerabschnitt verbindbares separates Bauteil ausgeführt sein. So ist es beispielsweise vorstellbar, lediglich den umlaufenden Reibungsabschnitt aus einem Werkstoff mit einem Molybdängehalt von ≥ 50 wt.% zu fertigen und mit einem günstigen und / oder leichten Trägerabschnitt, beispielsweise aus Stahl oder Aluminium, zu verbinden.

In einer Variante ist die komplette Bremsscheibe aus dem Werkstoff mit einem Molybdängehalt von ≥ 50 wt.% gebildet. Das ist fertigungstechnisch die einfachste Lösung. Auch in dieser Weiterbildung ist es bevorzugt vorgesehen, dass der Werkstoff einen Molybdängehalt von ≥ 80 wt.%, weiter bevorzugt von ≥ 90 wt.%, insbesondere bevorzugt von ≥ 95 wt.% aufweist. In anderen Worten ist bevorzugt vorgesehen, dass die Bremsscheibe aus Molybdän oder einer Molybdän-Basislegierung gefertigt ist.

Bevorzugt ist vorgesehen, dass die gesamte Bremsscheibe einstückig ausgebildet ist, das heißt, bevorzugt besteht keine stoffliche Trennung der genannten Abschnitte. Dies erlaubt eine besonders einfache Fertigung, beispielsweise durch Schneiden oder Stanzen. Für ein Schneiden von Molybdän-Basislegierungen haben sich beispielsweise Laserschneiden und Wasserstrahlschneiden bewährt. Diese Fertigungsroute bedient sich eines Halbzeugs, insbesondere Blech, als Ausgangsmaterial. Das Halbzeug ist bevorzugt durch Umformen, insbesondere durch Walzen, eines pulvermetallurgisch hergestellten Rohlings hergestellt.

Eine weitere Option ist die Darstellung über Pressen und Sintern (engl. *pressand-sinter,* p/s). Dabei entfällt der Schritt der Herstellung eines Halbzeugs. Vielmehr wird bei der Route über Pressen und Sintern bereits beim Pressen die spätere Gestalt der Komponente angelegt und anschließend gesintert. Am Beispiel der Bremsscheibe kann diese beispielsweise durch uni-axiales Pressen und Sintern endformnah hergestellt werden. Gegebenenfalls schließt eine spanende Bearbeitung und / oder eine Kalibrierung an.

Es kann vorgesehen sein, dass der zumindest abschnittsweise die Bremsscheibe bildende Werkstoff mit einem Molybdängehalt von ≥ 50 wt.% als Verbundwerkstoff oder als Werkstoffverbund ausgebildet ist.

Bei einem Verbundwerkstoff liegt eine Matrix als erste Phase vor, in die eine zweite Phase (beispielsweise Kupfer) eingebettet ist. Die Matrix kann hier bevorzugt von Molybdän gebildet sein, welches von einem zweiten Metall infiltriert ist.

Bei einem Werkstoffverbund liegen typischerweise diskrete Lagen unterschiedlicher Werkstoffe vor. Ein Beispiel für einen Werkstoffverbund ist ein Laminat aus Lagen von Molybdän und Kupfer. Natürlich können Mischformen bestehen. Auch wird in der Literatur nicht immer scharf zwischen Verbundwerkstoffen und Werkstoffverbunden unterschieden.

Indem der Werkstoff als Verbundwerkstoff oder als Werkstoffverbund ausbildet ist, können die günstigen Eigenschaften von Molybdän mit Eigenschaften anderer Werkstoffe vorteilhaft verbunden werden.

Hervorzuheben ist hier die Möglichkeit einer verstärkten Wärmeabfuhr durch die Kombination mit Kupfer (Wärmeleitfähigkeit bei Raumtemperatur: 398 W/mK) oder Aluminium (Wärmeleitfähigkeit bei Raumtemperatur: 234 W/mK).

Der Verbundwerkstoff kann beispielsweise durch einen porösen Molybdän-Körper gebildet sein, der mit einem anderen Werkstoff getränkt ist, typischerweise mit Kupfer.

Der Werkstoffverbund kann auch durch einen Schichtverbund aus Lagen von Molybdän und anderem Material gebildet sein. Ein Vertreter dieser Art von Werkstoffverbunden ist etwa ein Laminat aus Molybdän- und Kupferlagen.

Für die Bremsscheibe wegen der geringen Dichte und der hohen Wärmeleitfähigkeit von Aluminium ein Werkstoffverbund mit Aluminium besonders interessant sein. Aluminium würde dann bevorzugt eine Lage im Kern des Werkstoffverbunds bilden, während Molybdän äußere Lagen bildet.

Es kann vorgesehen sein, dass der zumindest abschnittsweise die Bremsscheibe bildende Werkstoff mit einem Molybdängehalt von ≥ 50 wt.% als Spritzschicht ausgebildet ist.

Dabei ist es beispielsweise vorstellbar, dass auf einen Trägerkörper Molybdän als Spritzschicht aufgebracht ist. Der Trägerkörper kann beispielsweise aus Stahl oder Aluminium bestehen. Die Spritzschicht aus Molybdän oder einer Mischung mit Molybdän kann dabei bevorzugt in jenem Bereich der Bremsscheibe ausgebildet sein, der der zur Kontaktierung mit einem Reibpartner vorgesehen ist. Die Spritzschicht kann zum Beispiel über Flammspritzen oder Kaltgasspritzen gebildet sein.

In einer Weiterbildung ist auf Molybdän, beispielsweise auf ein Molybdänblech, eine Reibschicht und / oder ein Trägerkörper aus einem verschiedenen Werkstoff als Spritzschicht ausgebildet.

Als besonders vorteilhaft hat sich erwiesen, wenn der Werkstoff mit einem Molybdängehalt von ≥ 50 wt.% von einer Molybdänlegierung mit einem Molybdänanteil von ≥ 99,93 wt.%, einem Gehalt an Bor von ≥ 3 ppmw (Gewichts-ppm) und einem Gehalt an Kohlenstoff von ≥ 3 ppmw gebildet ist. Weiter bevorzugt liegt der Gesamtanteil von Kohlenstoff und Bor in einem Bereich zwischen ≥ 15 ppmw und ≤ 50 ppmw. Mit dieser Zusammensetzung wurden besonders ausgewogene mechanische Eigenschaften erzielt.

Diese mikrodotierte Molybdänlegierung zeichnet sich durch besondere Duktilität und Schadenstoleranz aus und ist gut schweißbar. Die zuvor erwähnte Darstellung über Pressen und Sintern (p/s) ist für diese Molybdän-Legierung besonders interessant, da diese bereits im gepresst-gesinterten Zustand (also ohne Umformung) ausgezeichnete Festigkeit- und Duktilitätswerte aufweist.

Sofern nicht anders angegeben, ist bei Angaben, die nicht 100% ergeben, der Unterschied von üblichen Verunreinigungen gebildet.

Für alle den Molybdän-basierten Werkstoff betreffenden Weiterbildungen gilt, dass die Bremsscheibe teilweise oder aber vollständig aus dem betreffenden Werkstoff bestehen kann.

Bevorzugt ist die Bremsscheibe für ein motorisiertes oder unmotorisiertes Fahrzeug, insbesondere für ein Zwei- oder Dreirad ausgebildet. Weiter bevorzugt ist die Bremsscheibe als Bremsscheibe für ein Zweirad, insbesondere für ein Fahrrad ausgebildet.

Speziell bei Bremsscheiben für Fahrräder kommen die vorteilhaften Eigenschaften von Molybdän-Basiswerkstoffen besonders zur Geltung. Insbesondere hat der Trend zu E-Bikes (elektrisch betriebene oder zumindest elektrisch unterstützte Fahrräder) zu einem Bedarf an robusten Bremsscheiben geführt, da hier die bewegten Massen und Geschwindigkeiten größer sind als bei rein muskelbetriebenen Fahrrädern. Diese Faktoren treffen beispielsweise auch zu bei Lastenfahrrädern und Fahrradanhängern.

Auch ist nicht immer ein für Scheibenbremsen günstiges Bremsverhalten mit Bremspausen zur Abkühlung der Bremsscheiben gewährleistet. Erfindungsgemäße Bremsscheiben sind in diesem Zusammenhang besonders vorteilhaft wegen der erhöhten thermischen Belastbarkeit und den günstigen Bremseigenschaften.

Für diese Anmeldung werden insbesondere auch Lastenfahrräder, E-Bikes (Fahrräder mit elektrischer Motorunterstützung, auch ohne Treten) und Pedelecs (Fahrräder mit elektrischer Motorunterstützung beim Treten) als Fahrräder verstanden, auch wenn diese gegebenenfalls mehr als zwei Räder aufweisen und / oder gemäß einer Straßenverkehrsordnung nicht als Fahrräder gelten.

Bremsscheiben für Zweiräder, insbesondere Fahrräder, sind häufig aus Blechmaterial gefertigt, während Bremsscheiben für Personenkraftwagen oder Lastkraftwagen in der Regel aus Gussmaterial bestehen.

Die Darstellung von Bremsscheiben aus Blechmaterial bietet sich für Zweiräder, insbesondere Fahrräder an, da die Bremsscheiben kostengünstig aus Bandmaterial durch Schneiden oder Stanzen gewonnen werden können. Auch für Mopeds und leichtere Dreiräder ist eine Herstellung aus Blech möglich. Typische Abmessungen von Bremsscheiben für Fahrräder betragen beispielsweise:
Durchmesser von Bremsscheiben für Fahrräder liegen üblicherweise zwischen 140 mm und 180 mm, für Downhill-Räder sind Durchmesser von 203 mm und darüber üblich.

Die Materialstärken betragen üblicherweise wenigstens 1,5 mm bis 2,5 mm. Unter 1,5 mm haben konventionelle Bremsscheiben keine ausreichende Steifigkeit. Hier kann der Einsatz von Molybdän wegen des hohen E-Moduls gegenüber Stahl vorteilhaft sein.

Materialstärken über 2,5 mm sind wegen der hohen Masse unüblich. Ein niedriges Gewicht der Bremsscheiben ist allerdings im Downhill-Bereich weniger wichtig. Hier werden durchaus Bremsscheiben von 2,5 mm Stärke verwendet, die besonders robust sind.

Häufig sind die Bremsscheiben gelocht und / oder haben Aussparungen. Die Lochungen und / oder Aussparungen dienen zur Verbesserung einer Kühlwirkung und zur Gewichtsreduktion.

Ferner weisen Bremsscheiben in der Regel einen Befestigungsabschnitt auf, über welchen das erzeugte Bremsmoment auf eine Nabe übertragbar ist. Der Befestigungsabschnitt kann beispielsweise als Polygon-Aufnahme oder über Schraubenlöcher realisiert sein. Auch können Anbauteile vorgesehen sein, mit welchen die Bremsscheibe an der Nabe montiert wird.

Schutz wird auch begehrt für eine Scheibenbremse mit einer erfindungsgemäßen Bremsscheibe. Eine Scheibenbremse setzt sich im Wesentlichen zusammen aus Bremsscheibe, Bremssattel und Bremsbelägen. Der Bremssattel dient zur Aufnahme und Zustellung der Bremsbeläge auf die Bremsscheibe. Die Betätigung kann hydraulisch oder mechanisch erfolgen. Die Bremsscheibe und die Bremsbeläge sind die Reibpartner im System der Scheibenbremse.

Schutz wird auch begehrt für die Verwendung einer erfindungsgemäßen Bremsscheibe in einer Scheibenbremse, insbesondere in einer Scheibenbremse eines Zweirads, insbesondere eines Fahrrads.

Offenbart wird auch eine Scheibenbremse, wobei zumindest einer der Reibpartner zumindest abschnittsweise aus einem Werkstoff mit einem Molybdängehalt von ≥ 50 wt.% besteht. Damit ist die Möglichkeit zum Ausdruck gebracht, dass auch lediglich die Bremsbeläge aus einem Werkstoff mit einem Molybdängehalt von ≥ 50 wt.% bestehen können. Etliche der Vorzüge von Molybdän, insbesondere die Verschleißbeständigkeit, sind auch für den Einsatz in einem Bremsbelag nützlich.

In einer weiteren Variante wird ein Bremsbelag vorgeschlagen, der auch weniger als 50 wt.% Molybdän enthalten kann. Auch bei geringeren Gehalten an Molybdän, beispielsweise ≥ 10 wt.%, bevorzugt ≥ 20 wt.%, weiter bevorzugt ≥ 30 wt.% sorgt das Molybdän für eine gute Verschleißbeständigkeit.

In einer Anordnung mit einem Bremsbelag mit Molybdän könnte die Bremsscheibe stofflich konventionell ausgebildet sein, beispielsweise aus Stahl bestehen.

Schutz wird auch begehrt für ein Verfahren zur Herstellung einer Bremsscheibe. Das Verfahren umfasst die Schritte:
- Bereitstellen einer Pulvermischung mit einem Molybdängehalt von ≥ 50 wt.% und
   i) Pressen und Sintern der Pulvermischung zu einem Sinterling, Umformen des Sinterlings zu einem Halbzeug und Heraustrennen der Bremsscheibe
      oder
   ii) endformnahes Pressen der Pulvermischung und anschließendes Sintern und optionales Bearbeiten zur Darstellung der Bremsscheibe.

In der ersten Variante (i) wird also über eine pulvermetallurgische Route zunächst ein Halbzeug hergestellt. Zur Herstellung einer Bremsscheibe würde typischerweise ein Sinterling zu einem Blech gewalzt und aus diesem Bremsscheiben herausgeschnitten werden. Gegebenenfalls kann die Bremsscheibe noch überarbeitet werden, beispielsweise geschliffen.

Gemäß Variante (ii) wird die Bremsscheibe über eine pulvermetallurgische Route endformnah hergestellt. Es entfällt hier die Herstellung eines Halbzeugs.

Beide Varianten haben die beschriebenen Vorteile der pulvermetallugrischen Route. Die erste Variante (i) ist vorteilhaft hinsichtlich einer Flexibilität, etwa bezüglich Größen. Auch sind die mechanischen Eigenschaften in der Regel günstiger als von p/s Material.

Offenbart wird auch die Herstellung eines Bremsbelags. Das Verfahren umfasst die Schritte:
- Bereitstellen einer Pulvermischung mit einem Molybdängehalt von ≥ 10 wt.%
- Pressen und Sintern der Pulvermischung zu dem Bremsbelag.

Bevorzugt enthält die Pulvermischung ≥ 20 wt.% Molybdän, weiter bevorzugt ≥ 30 wt.% Molybdän, insbesondere ≥ 40 wt.% und weiter ≥ 50 wt.% Molybdän. Neben Molybdän weist die Pulvermischung organische und / oder anorganische Reibmittel auf. Typischerweise kann Graphit enthalten sein. Das Molybdän sorgt für eine gute Verschleißbeständigkeit.

### VERSUCHSERGEBNISSE

Im Folgenden werden Versuchsergebnisse an erfindungsgemäßen Bremsscheiben von Messungen an einem Reibungsprüfstand zusammengefasst.

Im Versuchsaufbau wurden geometrisch gleiche Bremsscheiben aus Stahl und solchen aus Molybdän mit verschiedenen Bremsleistungen beaufschlagt und die Bremswirkungen gegenübergestellt. Die Bremsscheiben wurden dazu flächig auf einen Trägerkörper aus Stahl montiert, welcher von einer instrumentierten Frässpindel angetrieben wurde.

Als Referenz wurde eine Stahl-Bremsscheibe "Centerline" der Firma SRAM mit einem Durchmesser von 160 mm verwendet. Als Molybdän-Bremsscheibe wurde eine geometrisch gleiche Bremsscheibe aus Molybdän-Blechmaterial eingesetzt. Die Materialstärke betrug jeweils 1,8 mm.

Die Bremsscheiben wurden einseitig über einen Bremsbelag mit einer Normalkraft von 500 N (Newton) beaufschlagt. Für die Versuche wurden organisch gebundene Bremsbeläge "Elixir XX Organic Compound" der Firma SRAM eingesetzt.

Über eine Drehmomentenerfassung an der Frässpindel wurde das resultierende Bremsmoment gemessen. Die Bremsleistungen wurden über die Drehzahl variiert. Bei den Versuchen wurden die Bremsscheiben bei Drehzahl von 240 U/min (Umdrehungen pro Minute) bis 1000 U/min einseitig mit einer Normalkraft von 500 N beaufschlagt. Ein einzelner Bremszyklus dauerte 10 Sekunden, wovon jeweils für fünf Sekunden eine stationäre Phase konstanter Bremskraft eingehalten wurde.

Eine Testreihe umfasste jeweils 100 Bremszyklen. Insgesamt erfolgten über 1000 Bremszyklen an den jeweiligen Bremsscheiben aus Stahl und Molybdän.

Dabei wurde festgestellt, dass die Molybdän-Bremsscheiben eine wesentlich geringere Streuung der Bremsmomente bei gleichen Normalkräften aufweisen. In anderen Worten liegen die erzeugten Bremsmomente bei Molybdän-Bremsscheiben in einem wesentlich engeren Band als bei Bremsscheiben aus Stahl. Für einen Benutzer wird diese Eigenschaft als gleichmäßigere und sanftere Bremswirkung erfahrbar. Die geringe Streuung wurde sowohl innerhalb eines einzelnen Bremsvorganges beobachtet als auch bei der Betrachtung des Mittelwerts des stationären Bereichs aus mehreren Bremszyklen. Der stationäre Bereich eines Bremsvorganges kennzeichnet eine Phase konstanter Bremskraft, wie es in der Figurenbeschreibung näher erläutert wird.

Die geringe Streuung bedeutet für den einzelnen Bremsvorgang, dass eine gegebene Betätigungskraft bei Molybdän-Bremsscheiben zu einem Bremsmoment innerhalb eines engen Bandes führt, welches Bremsmoment auch während der Bremsung nur gering fluktuiert. Die Bremswirkung innerhalb eines einzelnen Bremsvorganges ist damit besonders gleichmäßig.

Die geringe Streuung von mittleren Bremsmomenten bei der Betrachtung über mehrere Bremszyklen bedeutet eine vorhersehbare und wiederholgenaue Bremswirkung.

Ferner wurde festgestellt, dass die Molybdän-Bremsscheiben bei hohen Bremsleistungen (Versuche mit 1000 U/min) und folglich hohen Temperaturen tendenziell höhere Bremsmomente liefern als im kalten Zustand. Diese Eigenschaft kann einem Fading (Nachlassen der Bremswirkung bei Dauerbremsung) günstig entgegenwirken.

Neben den Versuchen am Reibungsprüfstand wurden praktische Tests mit Molybdän-Bremsscheiben an Fahrädern (Mountain-Bikes) durchgeführt. Im Zuge der Testfahrten wurden rund 5000 Höhenmeter an Abfahrten absolviert.

Die subjektiven Erfahrungen gegenüber Stahl-Bremsscheiben als Referenz wurden von den Testfahrern in einer Vergleichsmatrix protokolliert. Dabei wurden folgende Feststellungen gemacht:

| **Kriterium** | **Bewertung Molybdän-Bremsscheibe gegenüber Stahl-Bremsscheibe** |
|---|---|
| Bremswirkung bei Dauerbremsung (hohe Bremsscheiben-Temperatur) | besser |
| Bremswirkung bei Nässe | besser |
| Fading (Nachlassen der Bremswirkung bei Dauerbremsung) | besser (weniger) |
| Quietschen | besser (weniger) |
| Verschleiß (optische Beurteilung) | besser (weniger) |

Nach den Testfahrten konnte an den Molybdän-Bremsscheiben keine Abnützung festgestellt werden. An den Stahl-Scheiben wurde hingegen ein Verschleiß festgestellt.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine Bremsscheibe in einem Ausführungsbeispiel
- Fig. 2a, 2b:: schematisch Querschnitte weiterer Ausführungsbeispiele
- Fig. 3: ein Ausführungsbeispiel einer zusammengesetzten Bremsscheibe
- Fig. 4: eine schematische Darstellung einer Scheibenbremse
- Fig. 5: eine schematische Darstellung eines Bremsbelags
- Fig. 6: ein Fahrzeug mit einer Scheibenbremse
- Fig. 7a, 7b: ein Diagramm einzelner Bremsvorgänge
- Fig. 8: ein Diagramm einer Serie von 100 Bremsversuchen
- Fig. 9: ein Diagramm einer Serie von 500 Bremsversuchen

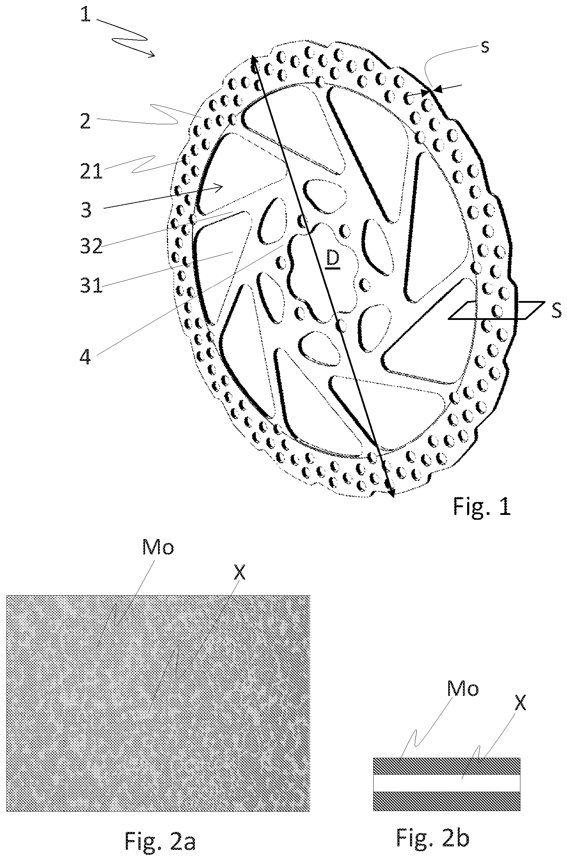

Figur 1 zeigt perspektivisch eine Bremsscheibe 1 in einem Ausführungsbeispiel. Dargestellt ist eine typische Bremsscheibe für Scheibenbremsen an Fahrrädern. Diese Art von Bremsscheiben zeichnen sich durch eine dünnwandige Bauform aus. Eine Materialstärke - s - beträgt typischerweise zwischen 1,5 mm und 2,5 mm. Ein Durchmesser - D - liegt üblicherweise zwischen 140 mm und 210 mm. Die Bremsscheibe 1 weist einen umlaufenden Reibungsabschnitt 2 auf, welcher bei einem Bremsvorgang in einer Reibpaarung steht. Häufig weist der Reibungsabschnitt 2 Löcher 21 für eine verbesserte Wärmeabfuhr auf. In der Regel weist eine Bremsscheibe 1 deutliche Materialaussparungen auf.

Über einen Befestigungsabschnitt 4 ist die Bremsscheibe 1 mit einer Nabe oder dergleichen zur Übertragung eines Bremsmomentes verbindbar. Der Befestigungsabschnitt 4 ist hier als 6-Loch-Aufnahme ausgestaltet.

Zwischen Befestigungsabschnitt 4 und Reibungsabschnitt 2 liegt ein Trägerabschnitt 3. Häufig ist der Trägerabschnitt 3 nicht mit Material ausgefüllt, sondern weist deutliche Materialaussparungen 31 auf, sodass der Trägerabschnitt 3 im Wesentlichen aus Armen 32 besteht.

Eine Dimensionierung der Arme 32 folgt mechanischen Erfordernissen. Auch kann ein Wärmehaushalt der Bremsscheibe 1 die Gestaltung des Trägerabschnitts 3 beeinflusst werden.

Reibungsabschnitt 2, Trägerabschnitt 3 und Befestigungsabschnitt 4 sind hier stofflich nicht getrennt. Vielmehr liegt in dem vorliegenden Ausführungsbeispiel die Bremsscheibe 1 einstückig aus einem Werkstoff mit einem Molybdängehalt von ≥ 50 wt.% vor. Eine Herstellung kann insbesondere über Laser-Schneiden von Blechmaterial erfolgen.

Alternativ zu der einstückigen Ausführung können Reibungsabschnitt 2, Trägerabschnitt 3 und Befestigungsabschnitt 4 separat gefertigt und miteinander verbunden sein.

Figuren 2a und 2b zeigen schematisch und beispielhaft Querschnitte möglicher weiterer Ausprägungen eines Werkstoffes mit einem Molybdängehalt von ≥ 50 wt.%, aus welchem die erfindungsgemäße Bremsscheibe 1 zumindest abschnittsweise besteht. Die Querschnitte können zum Beispiel einem Schnitt nach einer Schnittebene - S - aus Figur 1 entnommen sein.

Figur 2a zeigt einen Verbundwerkstoff aus einem Gerüst aus Molybdän ("Mo") und einem zweiten Werkstoff ("X"), von welchem zweiten Werkstoff das Gerüst aus Molybdän infiltriert ist.

Mit dem Beispiel von Kupfer als zweiter Werkstoff kann eine besonders hohe Wärmeleitfähigkeit bei guten mechanischen Kennwerten erzielt werden. Ein Beispiel ist ein Verbundwerkstoff mit bis zu 30 Gewichtsprozent Kupfer. Dieser Verbund vereint die hohe Wärmeleitfähigkeit von Kupfer und die geringe thermische Ausdehnung von Molybdän.

Am Beispiel von Aluminium als zweiter Werkstoff kann eine hohe Wärmeleitfähigkeit bei sehr guten mechanischen Kennwerten und geringem Gewicht erzielt werden.

Figur 2b zeigt schematisch eine weitere alternative Ausprägung eines Werkstoffes für eine erfindungsgemäße Bremsscheibe 1. Hier liegt der Werkstoff mit einem Molybdängehalt von ≥ 50 wt.% als Werkstoffverbund von Schichten von Molybdän mit wenigstens einem zweiten Werkstoff ("X") vor. Beispielsweise kann vorgesehen sein, dass die eine Oberfläche einer Bremsscheibe 1 bildende Lagen aus Molybdän bestehen mit einem dazu laminierten Kern aus Kupfer.

Am Beispiel von Aluminium als zweiter Werkstoff kann eine hohe Wärmeleitfähigkeit bei sehr guten mechanischen Kennwerten und geringem Gewicht erzielt werden.

Freilich können noch mehrere Lagen und / oder andere Werkstoffkombinationen bestehen. Insbesondere ist es auch vorstellbar, einen Trägerwerkstoff, beispielsweise Stahl, mit Molybdän zu beschichten. Insbesondere kann Molybdän als thermische Spritzschicht oder über Kaltgasspritzen (engl. *cold gas spray, CGS*) als Kaltgasspritzschicht ausgebildet sein.

Figuren 2a und 2b illustrieren also beispielhaft und lediglich auszugsweise mögliche Ausprägungen des Molybdän-basierten Werkstoffs.

Es ist vorstellbar, die gesamte Bremsscheibe 1 aus Molybdän-basierten Verbundwerkstoffen oder aus Werkstoffverbunden mit Molybdän darzustellen. Wirtschaftlicher kann es jedoch sein, lediglich den Reibungsabschnitt 2 aus einem Molybdän-basierten Verbundwerkstoff oder Werkstoffverbund darzustellen.

Im einfachsten Fall freilich besteht der Molybdän-basierte Werkstoff aus reinem Molybdän oder aus einer Molybdän-Legierung.

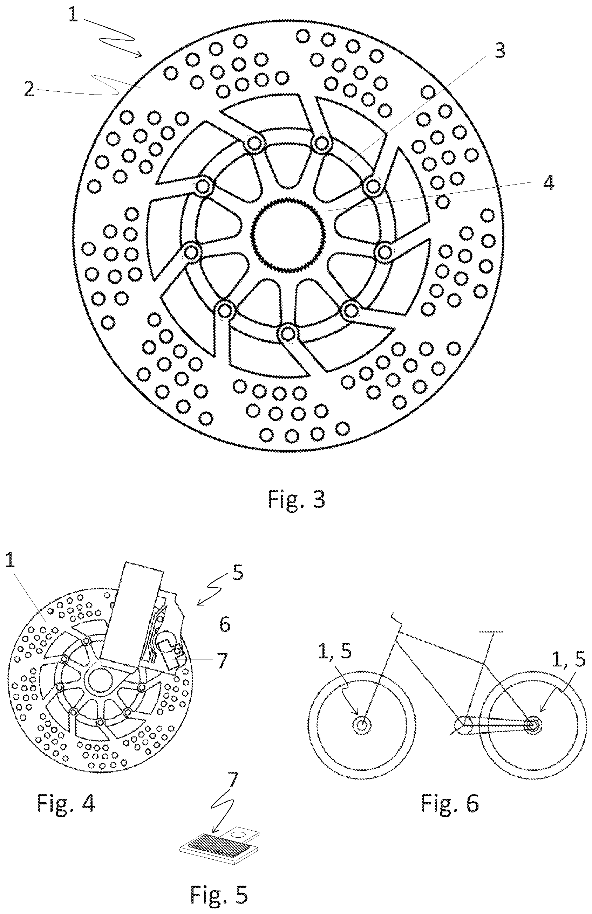

Figur 3 zeigt eine Bremsscheibe 1 in einem weiteren Ausführungsbeispiel. Hierin ist der umlaufende Reibungsabschnitt 2 als separates Bauteil ausgeführt, welches mit dem Trägerabschnitt 3 verbunden ist. Hier nicht dargestellt, aber zusätzlich vorstellbar ist eine stofflich getrennte Ausbildung und anschließende Verbindung von Trägerabschnitt 3 und Befestigungsabschnitt 4.

Der umlaufende Reibungsabschnitt 2 ist bevorzugt aus einem Molybdän-basiertem Werkstoff gebildet. Trägerabschnitt 3 und Befestigungsabschnitt 4 können beispielsweise aus Stahl bestehen.

Die Verbindung von Reibungsabschnitt 2 und Trägerabschnitt 3 ist hier über Niete als Verbindungsmittel realisiert. Alternativ oder zusätzlich sind auch andere Verbindungen oder Verbindungstechniken wie Formschluss, Schweißen, Löten, Kleben etc. vorstellbar.

Die hier gezeigte Bauweise mit einem separat ausgeführten Reibungsabschnitt 2 ist besonders dann interessant, wenn der Reibungsabschnitt 2 beispielsweise aus einem Molybdän-basierten Verbundwerkstoff oder Werkstoffverbund besteht. In einem solchen Fall können dann Trägerabschnitt 3 und Befestigungsabschnitt 4 im Wesentlichen hinsichtlich mechanischer Kriterien ausgelegt werden, während der Reibungsabschnitt 2 vorwiegend hinsichtlich seiner Reibungseigenschaften und / oder Wärmemanagement ausgelegt sein kann. In anderen Worten erlaubt diese Bauweise eine Entkopplung der Auslegungskriterien von Reibungsabschnitt 2, Trägerabschnitt 3 und Befestigungsabschnitt 4.

Über die Bauweise ist es auch besonders einfach möglich, an Reibungsabschnitt 2, Trägerabschnitt 3 und Befestigungsabschnitt 4 unterschiedliche Materialstärken zu realisieren.

Freilich ist es auch vorstellbar, eine Bremsscheibe 1 nach dem hier gezeigten Konstruktionsprinzip auch vollständig aus einem Molybdän-basiertem Werkstoff zu bilden.

Figur 4 zeigt schematisch eine Scheibenbremse 5 für ein Fahrrad. Die Scheibenbremse 5 umfasst eine Bremsscheibe 1, einen Bremssattel 6 und Bremsbeläge 7.

Bei einer Betätigung der Scheibenbremse 5 werden die Bremsbeläge 7 an die Bremsscheibe 1 gedrückt und erzeugen durch Reibung eine Bremswirkung.

Figur 5 zeigt schematisch einen Bremsbelag 7. Als Bremsbelag 7 wird hier der eigentliche Reibbelag bezeichnet, der auf einer Trägerplatte fixiert ist.

Für Bremsscheiben 1 aus einem Werkstoff mit einem Molybdängehalt von ≥ 50 wt.% können konventionelle, kommerziell verfügbare Bremsbeläge 7 verwendet werden.

Gemäß einem weiteren Aspekt der Offenbarung kann es vorgesehen sein, dass Bremsbeläge 7 aus einem Werkstoff mit einem Molybdängehalt von ≥ 10 wt.% bestehen. Bevorzugt ist vorgesehen, dass der Werkstoff einen Molybdängehalt von ≥ 20 wt.%, weiter bevorzugt von ≥ 30 wt.%, insbesondere bevorzugt von ≥ 40 wt.% und weiter ≥ 50 wt.%, aufweist. Vorzüge von Molybdän sind auch für den Einsatz in einem Bremsbelag nützlich, insbesondere die Steigerung einer Verschleißbeständigkeit.

In einer solchen Anordnung könnte die Bremsscheibe stofflich herkömmlich ausgebildet sein, beispielsweise aus Stahl bestehen.

Freilich kann im Fall von Bremsbelägen 7 aus einem Molybdän-Basiswerkstoff auch die Bremsscheibe 1 aus einem Molybdän-Basiswerkstoff gebildet sein. Figur 6 zeigt schematisch ein Fahrzeug, im vorliegenden Beispiel ein Fahrrad, welches mit Scheibenbremsen 5 mit erfindungsgemäßen Bremsscheiben 1 ausgestattet ist. Die erfindungsgemäßen Bremsscheiben 1 eignen sich besonders für Zweiräder, insbesondere für Fahrräder.

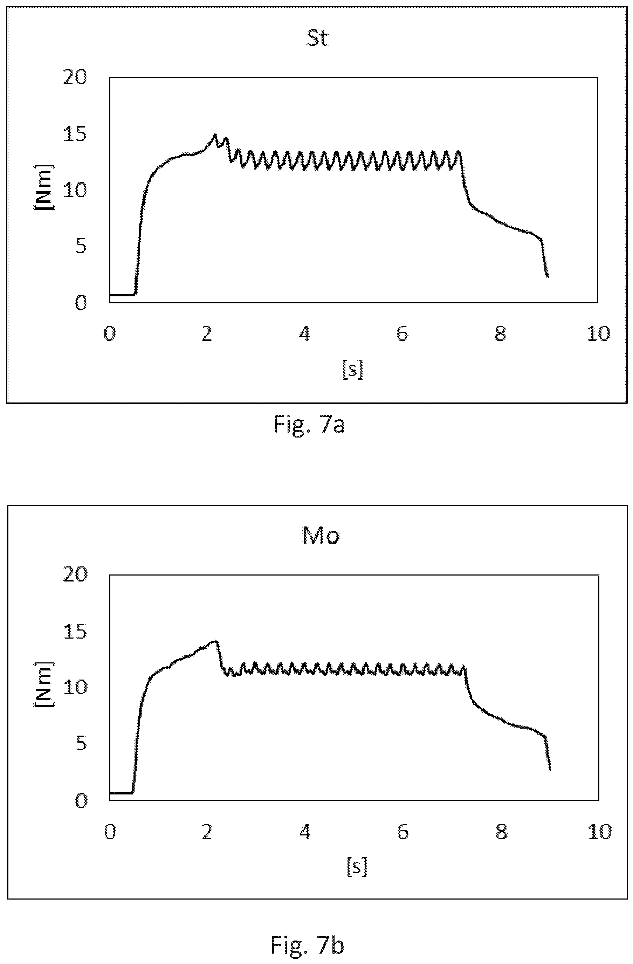

Figuren 7a und 7b zeigen Diagramme von einzelnen Bremsvorgängen nach dem weiter oben beschriebenen Versuchsaufbau.

Ein einzelner Bremsvorgang gliedert sich jeweils in eine Phase von etwa 2,5 Sekunden für einen Bremskraftaufbau, an welche eine stationäre Phase konstanter Bremskraft von rund fünf Sekunden anschließt. Nach etwa 7,5 Sekunden wird die Bremskraft wieder abgebaut. Für eine spätere Diskussion des stationären Bremsverhaltens wird nur der stationäre Bereich zwischen 2,5 Sekunden und 7,5 Sekunden eines einzelnen Bremsvorgangs betrachtet und Werte aus diesem Bereich werden für eine Mittelung herangezogen.

Figur 7a zeigt dabei den Verlauf des Bremsmoments in [Nm] (Newtonmeter) auf der Ordinate über der Zeit in Sekunden [s] für einen Bremsvorgang an einer Bremsscheibe aus Stahl ("St"). Figur 7b zeigt dazu analog einen Bremsvorgang an einer Bremsscheibe aus Molybdän ("Mo"). Im Vergleich der zwei Kurven erkennt man, dass die Fluktuation des Bremsmoments bei der Bremsscheibe aus Stahl größer ist als bei der Bremsscheibe aus Molybdän. Bei der Bremsscheibe aus Molybdän lag eine Streuung des Bremsmomentes im stationären Bereich in einem als Beispiel herausgegriffenen Versuch etwa bei 0,3 Nm um einen Mittelwert von 11,6 Nm. Bei Stahl lag in einem vergleichbaren Datenbereich Streuung des Bremsmomentes im stationären Bereich bei rund 0,5 Nm um einen Mittelwert von 12,6 Nm. In der Praxis bedeutet dies ein sanfteres Bremsverhalten innerhalb eines Bremsvorganges mit der Bremsscheibe aus Molybdän.

Der Mittelwert des Bremsmoments an Stahl liegt hier etwas höher als bei Molybdän. Ein Grund dafür könnte sein, dass die verwendeten Bremsbeläge für eine Paarung mit Stahl optimiert sind.

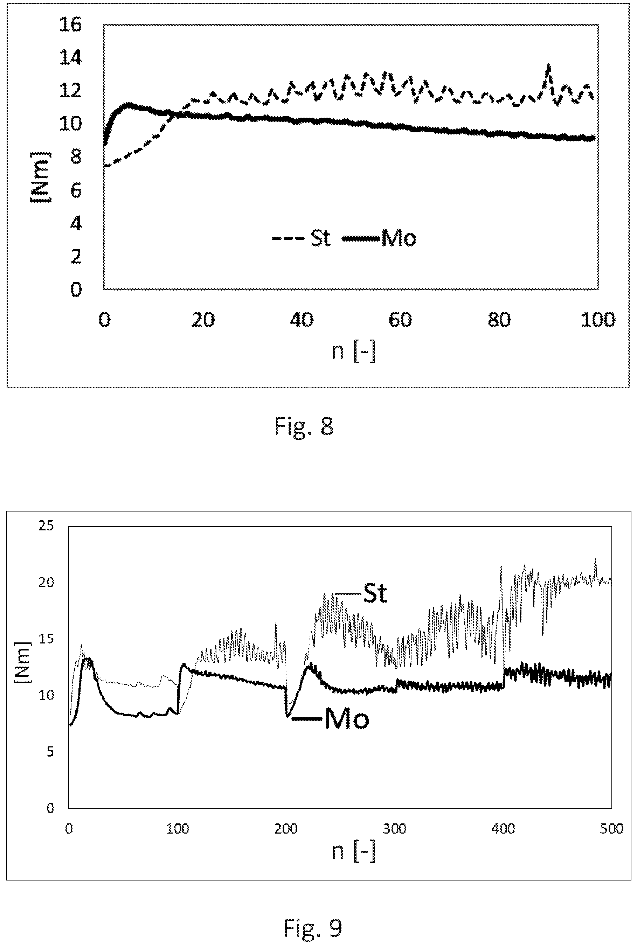

Figur 8 zeigt eine Darstellung von Mittelwerten des Bremsmoments von zuvor besprochenen stationären Bereichen einzelner Bremsvorgänge. Im Diagramm aufgetragen sind Mittelwerte des Bremsmoments auf der Ordinate in [Nm] für die Bremsscheibe aus Molybdän ("Mo" - fette Linie) und die Bremsscheibe aus Stahl ("St" - dünne strichlierte Linie) über der Anzahl - n - der Bremszyklen auf der Abszisse. Eine Anzahl - n - ist dimensionslos, also [-]. Es erfolgten 100 Bremszyklen, wobei die Auftragung der chronologischen Reihenfolge der einzelnen Bremsvorgänge entspricht.

Markant ist dabei die starke Streuung der stationären Bremsmomente an der Bremsscheibe aus Stahl gegenüber einem glatten Verlauf mit geringer Streuung an der Bremsscheibe aus Molybdän. In der Praxis bedeutet dies ein besonders gleichmäßiges und wiederholbares Bremsverhalten mit der Bremsscheibe aus Molybdän.

Ferner zu beobachten ist ein etwas rascheres Ansteigen des mittleren Bremsmoments bei Molybdän auf ein Plateau nach etwa drei bis fünf Bremszyklen, während bei Stahl ein Plateau erst nach etwa 20 Bremszyklen erreicht wurde. Ohne sich auf eine physikalische Theorie festzulegen, könnte der raschere Anstieg bei Molybdän auf dessen geringere Wärmekapazität und damit schnellere Erwärmung zurückzuführen sein. In der Praxis bedeutet dies ein rasches Erreichen einer Betriebstemperatur mit einem im Wesentlichen gleichbleibenden Reibungsverhalten.

Figur 9 zeigt eine Zusammenfassung von fünf Testreihen zu jeweils 100 Bremszyklen. Dargestellt sind wieder die gemittelten Bremsmomente aus den stationären Bereichen der einzelnen Bremsvorgänge. Aufgetragen sind die Bremsmomente auf der Ordinate in [Nm] über der Anzahl - n- [-] der Bremszyklen auf der Abszisse. Die Auftragung der Ergebnisse erfolgte in ihrer chronologischen Reihenfolge. Die Ergebnisse der Testreihen wurden für das Diagramm aneinandergefügt.

Man erkennt, dass bei der Bremsscheibe aus Molybdän ("Mo" - fette Linie) im Gesamteindruck von 500 Bremsvorgängen ein sehr gut reproduzierbares Bremsmoment vorliegt. Die Abweichungen innerhalb jeder der fünf Testreihen sind geringer als bei der Bremsscheibe aus Stahl ("St" - dünne Linie). Zudem ist die Streuung des Bremsmoments zwischen den Testreihen bei Molybdän geringer als bei Stahl.

## Patentansprüche

1. Bremsscheibe für eine Scheibenbremse, wobei die Bremsscheibe (1) einen umlaufenden Reibungsabschnitt (2) aufweist, welcher Reibungsabschnitt (2) vollständig aus einem metallischen Werkstoff mit einem Molybdängehalt von ≥ 50 wt.% gebildet ist.

2. Bremsscheibe nach einem der vorangegangenen Ansprüche, wobei die Bremsscheibe (1) vollständig aus dem Werkstoff mit einem Molybdängehalt von ≥ 50 wt.% gebildet ist.

3. Bremsscheibe nach einem der vorangegangenen Ansprüche, wobei der Werkstoff mit einem Molybdängehalt von ≥ 50 wt.% von einer Molybdänlegierung mit einem Molybdänanteil von ≥ 99,93 wt.%, einem Gehalt an Bor von ≥ 3 ppmw und einem Gehalt an Kohlenstoff von ≥ 3 ppmw gebildet ist.

4. Bremsscheibe nach einem der vorangegangenen Ansprüche, wobei die Bremsscheibe (1) pulvermetallurgisch hergestellt ist.

5. Bremsscheibe nach Anspruch 4, wobei die Bremsscheibe (1) durch Pressen und Sintern hergestellt ist.

6. Verwendung einer Bremsscheibe (1) nach einem der vorangegangenen Ansprüche an einem Fahrrad.

7. Scheibenbremse umfassend wenigstens einen Bremssattel (6), wenigstens einen Bremsbelag (7) sowie eine Bremsscheibe (1) nach einem der vorangegangenen Ansprüche.

8. Scheibenbremse (5) umfassend wenigstens einen Bremssattel (6), eine Bremsscheibe (1) nach einem der vorangegangenen Ansprüche und einen Bremsbelag (7), wobei der Bremsbelag (7) zumindest abschnittsweise aus einem Werkstoff mit einem Molybdängehalt von ≥ 10 wt.% besteht.

9. Verfahren zur Herstellung einer Bremsscheibe (1) nach einem der vorangegangenen Ansprüche umfassend die Schritte:
- Bereitstellen einer Pulvermischung mit einem Molybdängehalt von ≥ 50 wt.% und
i) Pressen und Sintern der Pulvermischung zu einem Sinterling, Umformen des Sinterling zu einem Halbzeug und Heraustrennen der Bremsscheibe (1) oder
ii) endformnahes Pressen der Pulvermischung und anschließendes Sintern und optionales Bearbeiten zur Darstellung der Bremsscheibe (1).

## Claims

1. Brake disc for a disc brake, wherein the brake disc (1) has a circumferential friction section (2) which friction section (2) is formed entirely from a metallic material with a molybdenum content of ≥ 50 wt.%.

2. Brake disc according to claim 1, wherein the brake disc (1) is formed entirely from the material with a molybdenum content of ≥ 50 wt.%.

3. Brake disc according to one of the preceding claims, wherein the material with a molybdenum content of ≥ 50 wt.% is formed from a molybdenum alloy with a molybdenum content of ≥ 99.93 wt.%, a boron content of ≥ 3 ppmw and a carbon content of ≥ 3 ppmw.

4. Brake disc according to one of the preceding claims, wherein the brake disc (1) is manufactured by powder metallurgy.

5. Brake disc according to claim 4 , wherein the brake disc (1) is manufactured by pressing and sintering.

6. Use of a brake disc (1) according to one of the preceding claims on a bicycle.

7. Disc brake comprising at least one brake caliper (6), at least one brake pad (7) and a brake disc (1) according to one of the preceding claims.

8. Disc brake (5) comprising at least one brake caliper (6), a brake disc (1) according to one of the preceding claims and a brake pad (7), wherein the brake pad (7) consists at least in sections of a material with a molybdenum content of ≥ 10 wt.%.

9. Method for manufacturing a brake disc (1) according to one of the preceding claims, comprising the steps:
- providing a powder mixture with a molybdenum content of ≥ 50 wt.% and
i) pressing and sintering the powder mixture to form a sintered compact, forming the sintered compact into a semi-finished product and cutting out the brake disc (1), or
ii) pressing the powder mixture to a near net shape and then sintering and optionally machining to produce the brake disc (1).

## Revendications

1. Disque de frein pour un frein à disque, le disque (1) de frein présentant une section de friction (2) périphérique, **caractérisé en ce que** la section de friction (2) est formée complètement d'un matériau métallique présentant une teneur en molybdène ≥ 50% en poids.

2. Disque de frein selon l'une des revendications précédentes, le disque (1) de frein étant formé complètement du matériau présentant une teneur en molybdène ≥ 50% en poids.

3. Disque de frein selon l'une des revendications précédentes, le matériau présentant une teneur en molybdène ≥ 50% en poids étant formé d'un alliage de molybdène présentant une proportion de molybdène ≥ 99,93% en poids, une teneur en bore ≥ 3 ppm en poids et une teneur en carbone ≥ 3 ppm en poids.

4. Disque de frein selon l'une des revendications précédentes, le disque (1) de frein étant fabriqué par métallurgie des poudres.

5. Disque de frein selon la revendication 4, le disque (1) de frein étant fabriqué par pressage et frittage.

6. Utilisation d'un disque (1) de frein selon l'une des revendications précédentes sur une bicyclette.

7. Frein à disque comprenant au moins un étrier de frein (6), au moins une plaquette de frein (7) ainsi qu'un disque de frein (1) selon l'une des revendications précédentes.

8. Frein (5) à disque comprenant au moins un étrier (6) de frein, un disque (1) de frein selon l'une des revendications précédentes et une plaquette (7) de frein, la plaquette (7) de frein étant constituée au moins par sections d'un matériau présentant une teneur en molybdène ≥ 10% en poids.

9. Procédé de fabrication d'un disque (1) de frein selon l'une des revendications 1 à 5, comprenant les étapes :
- mise à disposition d'un mélange de poudres présentant une teneur en molybdène ≥ 50% en poids et
i) pressage et frittage du mélange de poudres en une pièce frittée, façonnage de la pièce frittée en un produit semi-fini et découpe du disque (1) de frein ou
ii) pressage aux formes proches de la forme finale du mélange de poudres et frittage consécutif et usinage éventuel pour la formation du disque (1) de frein.
